# EUROPEAN PATENT APPLICATION

(11) **EP 4 803 971 A1**
(43) Date of publication of application: **09.09.2026**
(21) Application number: 25896353.7
(22) Date of filing: 19.05.2025
(51) Int. Cl.: G06F 1/04

(54) **INTEGRATED CIRCUIT, CROSS-CLOCK DOMAIN DATA TRANSMISSION METHOD, ELECTRONIC DEVICE, AND STORAGE MEDIUM**

(30) Priority: 25.12.2024 CN 202411930853
(71) Applicant: HYGON INFORMATION TECHNOLOGY CO., LTD., Tianjin 300392 (CN)
(72) Inventor: CHEN, Bairu, Tianjin 300392 (CN); ZHANG, Zhuo, Tianjin 300392 (CN); LIU, Xun, Tianjin 300392 (CN)
(74) Representative: Maiwald GmbH
(86) International application number: PCT/CN2025/095680
(87) International publication number: WO 2026/137679

(57) **Abstract**

Embodiments of the present disclosure provide an integrated circuit, a data transmission method for clock domain crossing, an electronic device, and a storage medium. The integrated circuit includes a first clock domain and a second clock domain. The first clock domain includes a first pointer control module, and the second clock domain includes a second pointer control module. The first pointer control module includes a first synchronous pointer control module, which is configured to: determine, in response to the frequency of a first clock signal being greater than the frequency of the second clock signal, the phase relationship between the first clock signal and the second clock signal according to a second clock phase and a second clock cycle of the second clock domain, the first clock signal, and a first clock phase of the first clock domain, and determine a first pointer control signal based on the phase relationship; and determine, in response to the frequency of the first clock signal being less than the frequency of the second clock signal, the first pointer control signal as a first value, so that a first read pointer and a first write pointer increase by the first value in each clock cycle of the first clock signal.

## Description

### CROSS-REFERENCE TO RELATED APPLICATION

The application claims priority of the Chinese Patent Application No. 202411930853.5, filed on December 25, 2024, the disclosure of which is incorporated herein by reference in its entirety as part of the present application.

### TECHNICAL FIELD

Embodiments of the present disclosure relate to an integrated circuit, a data transmission method for clock domain crossing, an electronic device, and a non-transitory computer-readable storage medium.

### BACKGROUND

A processor usually uses one or more clock signals to synchronize logical operations at modules of the processor, thereby preventing errors such as setup errors and race conditions. A processor uses different clock signals for different parts of the processor, where each part of the processor is called a clock domain. By using different clock domains, the processor operates different parts at different frequencies and also operates different parts relatively independently with respect to the timing of logical operations. For example, the processor can use clock signals of different frequencies to synchronize different clock domains, thereby improving processing efficiency. In addition, the processor can provide different clock signals to different clock domains without synchronizing the different clock signals, thereby simplifying clock management and signal routing at the processor.

### SUMMARY

At least one embodiment of the present disclosure provides an integrated circuit, which includes a first clock domain determined based on a first clock signal and a second clock domain determined based on a second clock signal, where the first clock signal and the second clock signal are same-source clock signals, a frequency of the first clock signal is greater than a frequency of the second clock signal, or the frequency of the first clock signal is less than the frequency of the second clock signal, the first clock domain includes a first pointer control module, the second clock domain includes a second pointer control module, and the first pointer control module is configured to generate a first pointer control signal for the first clock domain, so that a first read pointer and a first write pointer in the first clock domain are adjusted according to the first pointer control signal, where the first pointer control signal is used to indicate an update time point of the first read pointer and an update time point of the first write pointer; and the second pointer control module is configured to generate a second pointer control signal for the second clock domain, so that a second read pointer and a second write pointer in the second clock domain are adjusted according to the second pointer control signal, where the second pointer control signal is used to indicate an update time point of the second read pointer and an update time point of the second write pointer; the integrated circuit further includes a first first-in-first-out buffer and a second first-in-first-out buffer, the first first-in-first-out buffer is configured to perform data transmission from the first clock domain to the second clock domain based on the first write pointer and the second read pointer, and the second first-in-first-out buffer is configured to perform data transmission from the second clock domain to the first clock domain based on the first read pointer and the second write pointer; and the first pointer control module includes a first synchronous pointer control module, and the first synchronous pointer control module is configured to: determine, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determine the first pointer control signal based on the phase relationship; and determine, in response to the frequency of the first clock signal being less than the frequency of the second clock signal, the first pointer control signal as a first value, so that the first read pointer and the first write pointer increase by the first value in each clock cycle of the first clock signal.

For example, in the integrated circuit provided by at least one embodiment of the present disclosure, the first synchronous pointer control module and a second synchronous pointer control module included in the second pointer control module have a same structure, each of the first synchronous pointer control module and the second synchronous pointer control module includes a first sub-module and a second sub-module, and a first sub-module of the first synchronous pointer control module is configured to determine the first clock phase according to a first clock cycle of the first clock domain, where the first clock phase is used to indicate a phase value of each clock cycle of the first clock signal; and a second sub-module of the first synchronous pointer control module is configured to determine the first pointer control signal, where in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle of the first clock signal.

For example, in the integrated circuit provided by at least one embodiment of the present disclosure, the second sub-module includes a phase synchronization detection unit, a phase estimation unit, and a phase tracking unit, and the phase synchronization detection unit is configured to determine a target clock phase in the second clock signal based on the second clock phase and the first clock signal, where the target clock phase is a phase value of one clock cycle that is selected in the second clock signal; the phase estimation unit is configured to determine a target clock cycle in the first clock signal corresponding to the target clock phase based on the first clock phase and the second clock cycle, where the target clock phase is located in a phase interval corresponding to the target clock cycle, and the phase interval is determined by a phase value of the target clock cycle and a phase value of a next clock cycle of the target clock cycle; and the phase tracking unit is configured to continuously estimate the first pointer control signal output in each current clock cycle of the first clock signal based on the target clock phase and the target clock cycle.

For example, in the integrated circuit provided by at least one embodiment of the present disclosure, the phase synchronization detection unit includes a multi-stage flip-flop group and an AND gate, and the multi-stage flip-flop group is configured to use the first clock signal as a clock to synchronize a transition edge that is selected in the second clock signal; and the AND gate is configured to perform an AND operation on the transition edge that is synchronized and the second clock phase to obtain a phase value of a clock cycle where the transition edge that is selected is located as the target clock phase.

For example, in the integrated circuit provided by at least one embodiment of the present disclosure, the phase estimation unit is configured to compare the target clock phase with phase intervals respectively corresponding to a plurality of clock cycles to determine the target clock cycle corresponding to the target clock phase, where the plurality of clock cycles are a plurality of clock cycles in the first clock signal before the transition edge that is synchronized.

For example, in the integrated circuit provided by at least one embodiment of the present disclosure, the phase estimation unit is further configured to estimate a phase change of the second clock signal measured by a clock cycle of the first clock signal.

For example, in the integrated circuit provided by at least one embodiment of the present disclosure, the phase tracking unit is configured to continuously estimate the first pointer control signal output in each current clock cycle of the first clock signal based on the target clock phase and the target clock cycle, by executing following steps: determining a clock phase that is to-be-estimated based on the target clock phase and the second clock cycle; in the current clock cycle: determining whether the clock phase that is to-be-estimated is located in a phase interval corresponding to the current clock cycle based on the clock phase that is to-be-estimated; determining, in response to the clock phase that is to-be-estimated being located in the phase interval corresponding to the current clock cycle, the first pointer control signal output in the current clock cycle as the first value, and updating the clock phase that is to-be-estimated based on the second clock cycle; and determining, in response to the clock phase that is to-be-estimated not being located in the phase interval corresponding to the current clock cycle, the first pointer control signal output in the current clock cycle as the second value.

For example, in the integrated circuit provided by at least one embodiment of the present disclosure, the first read pointer and the first write pointer are adjusted according to the first pointer control signal in each clock cycle of the first clock signal, and the second read pointer and the second write pointer are adjusted according to the second pointer control signal in each clock cycle of the second clock signal; in response to a data write operation being generated in a write clock cycle of the first clock domain, a data read operation is performed in a read clock cycle in the second clock signal corresponding to the write clock cycle, where in response to the frequency of the first clock signal being greater than the frequency of the second clock signal, a rising edge in the second clock signal that is a+1 second clock cycles apart from a rising edge of the read clock cycle is located in a previous clock cycle of the write clock cycle in the first clock signal, and in response to the frequency of the first clock signal being less than the frequency of the second clock signal, a rising edge that is a first clock cycles apart from a rising edge of the write clock cycle is located in a previous clock cycle of the read clock cycle in the second clock signal, where a is a positive integer.

For example, in the integrated circuit provided by at least one embodiment of the present disclosure, the first pointer control module further includes a first state machine and a first asynchronous pointer control module, and the second pointer control module further includes a second state machine and a second asynchronous pointer control module, and the first asynchronous pointer control module and the second asynchronous pointer control module each include a multi-stage flip-flop, and the first asynchronous pointer control module and the second asynchronous pointer control module perform, through respective multi-stage flip-flops, synchronization of the first write pointer, the first read pointer, the second write pointer, and the second read pointer between different clock domains; the first state machine is configured to control, in a case where frequency switching occurs, the first clock domain to use the first asynchronous pointer control module to perform data transmission across clock domains, and control, after the frequency switching is completed and phase estimating is completed, the first clock domain to use the first synchronous pointer control module to perform the data transmission across clock domains; and the second state machine is configured to control, in a case where the frequency switching occurs, the second clock domain to use the second asynchronous pointer control module to perform the data transmission across clock domains, and control, after the frequency switching is completed and the phase estimating is completed, the second clock domain to use the second synchronous pointer control module to perform the data transmission across clock domains.

For example, in the integrated circuit provided by at least one embodiment of the present disclosure, the first state machine and the second state machine are further configured to receive first indication information indicating whether the frequency switching is completed, and second indication information indicating a frequency magnitude relationship between the first clock signal and the second clock signal, and in response to the first indication information indicating that the frequency switching occurs, the first state machine controls the first clock domain to use the first asynchronous pointer control module to perform the data transmission across clock domains, and the second state machine controls the second clock domain to use the second asynchronous pointer control module to perform the data transmission across clock domains; and the first state machine and the second state machine are further configured to determine whether the frequency switching is completed and the phase estimating is completed according to the first indication information and the second indication information.

For example, in the integrated circuit provided by at least one embodiment of the present disclosure, the first state machine is configured to determine whether the frequency switching is completed and the phase estimating is completed according to the first indication information and the second indication information, by executing the following operations: in response to the first indication information indicating that the frequency switching is completed, and the second indication information indicating that the frequency of the first clock signal is greater than the frequency of the second clock signal: the first state machine controls the first synchronous pointer control module to perform the phase estimating to obtain the phase relationship and determine the first pointer control signal based on the phase relationship, in response to the phase estimating being completed by the first synchronous pointer control module, determine that the frequency switching is completed and the phase estimating is completed, and the first state machine is further configured to perform synchronous handshaking with the second state machine, so that the second state machine controls the second clock domain to use the second synchronous pointer control module to perform the data transmission across clock domains; and in response to the first indication information indicating that the frequency switching is completed, and the second indication information indicating that the frequency of the first clock signal is less than the frequency of the second clock signal: after synchronous handshaking with the second state machine is completed, determine that the frequency switching is completed and the phase estimating is completed.

At least one embodiment of the present disclosure provides a data transmission method for clock domain crossing, applied to a first clock domain determined based on a first clock signal and a second clock domain determined based on a second clock signal, where the first clock domain includes a first first-in-first-out buffer, the second clock domain includes a second first-in-first-out buffer, the first clock signal and the second clock signal are same-source clock signals, a frequency of the first clock signal is greater than a frequency of the second clock signal, or the frequency of the first clock signal is less than the frequency of the second clock signal, and the data transmission method includes: determining, in the first clock domain, a first pointer control signal, and adjusting a first read pointer and a first write pointer of the first clock domain according to the first pointer control signal, where the first pointer control signal is used to indicate an update time point of the first read pointer and an update time point of the first write pointer; determining, in the second clock domain, a second pointer control signal, and adjusting a second read pointer and a second write pointer of the second clock domain according to the second pointer control signal, where the second pointer control signal is used to indicate an update time point of the second read pointer and an update time point of the second write pointer; and performing data transmission from the first clock domain to the second clock domain by using the first first-in-first-out buffer based on the first write pointer and the second read pointer, and performing data transmission from the second clock domain to the first clock domain by using the second first-in-first-out buffer based on the first read pointer and the second write pointer, where determining the first pointer control signal includes: determining, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determining the first pointer control signal based on the phase relationship; and determining, in response to the frequency of the first clock signal being less than the frequency of the second clock signal, the first pointer control signal as a first value, so that the first read pointer and the first write pointer increase by the first value in each clock cycle of the first clock signal.

For example, in the data transmission method provided by at least one embodiment of the present disclosure, determining the first pointer control signal further includes: determining the first clock phase according to a first clock cycle of the first clock domain, where the first clock phase is used to indicate a phase value of each clock cycle of the first clock signal, where in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle.

For example, in the data transmission method provided by at least one embodiment of the present disclosure, determining the phase relationship between the first clock signal and the second clock signal according to the second clock phase and the second clock cycle of the second clock domain, the first clock signal, and the first clock phase, and determining the first pointer control signal based on the phase relationship includes: determining a target clock phase in the second clock signal based on the second clock phase and the first clock signal, where the target clock phase is a phase value of a clock cycle that is selected in the second clock signal; determining a target clock cycle in the first clock signal corresponding to the target clock phase based on the first clock phase and the second clock cycle, where the target clock phase is located in a phase interval corresponding to the target clock cycle, and the phase interval is determined by a phase value of the target clock cycle and a phase value of a next clock cycle of the target clock cycle; and continuously estimating the first pointer control signal output in each current clock cycle of the first clock signal based on the target clock phase and the target clock cycle.

For example, the data transmission method provided by at least one embodiment of the present disclosure further includes: controlling, when frequency switching occurs, the first clock domain and the second clock domain to use an asynchronous pointer control logic to perform data transmission across clock domains, and controlling, after the frequency switching is completed and phase estimating is completed, the first clock domain and the second clock domain to use a synchronous pointer control logic to perform the data transmission across clock domains, where the asynchronous pointer control logic includes synchronizing the first write pointer, the first read pointer, the second write pointer, and the second read pointer between different clock domains through a multi-stage flip-flop; the synchronous pointer control logic includes obtaining the phase relationship and performing the data transmission across clock domains based on the phase relationship.

At least one embodiment of the present disclosure provides an electronic device, which includes: a memory, non-transitorily storing a computer-executable instruction; and a processor, configured to run the computer-executable instruction, where when the computer-executable instruction is run by the processor, the data transmission method for clock domain crossing according to any embodiment of the present disclosure is implemented.

At least one embodiment of the present disclosure provides a non-transient computer-readable storage medium, where the non-transitory computer-readable storage medium stores a computer-executable instruction, and when the computer-executable instruction is executed by a processor, the data transmission method for clock domain crossing according to any embodiment of the present disclosure is implemented.

### BRIEF DESCRIPTION OF DRAWINGS

In order to more clearly illustrate the technical solutions of the embodiments of the present disclosure, the drawings of the embodiments will be briefly introduced below. Obviously, the drawings described below only relate to some embodiments of the present disclosure, but do not limit the present disclosure.
Fig. 1 is a schematic structural diagram of a multi-core chip system;
Fig. 2 is a schematic block diagram of an integrated circuit provided by at least one embodiment of the present disclosure;
Fig. 3 is a schematic diagram of a clock phase provided by an embodiment of the present disclosure;
Fig. 4 is a schematic diagram of a phase relationship between a first clock domain and a second clock domain provided by an embodiment of the present disclosure;
Fig. 5 is a schematic diagram of a first synchronous pointer control module provided by an embodiment of the present disclosure;
Fig. 6 is a schematic structural diagram of a second sub-module provided by at least one embodiment of the present disclosure;
Fig. 7A is a schematic structural diagram of a phase synchronization detection unit provided by an embodiment of the present disclosure;
Fig. 7B is a schematic timing diagram of the phase synchronization detection unit shown in Fig. 7A provided by an embodiment of the present disclosure;
Fig. 8A is a timing diagram of a data transmission process across clock domains provided by an embodiment of the present disclosure;
Fig. 8B is a timing diagram of a data transmission process across clock domains provided by another embodiment of the present disclosure;
Fig. 9 is a schematic diagram of state switching of a state machine provided by an embodiment of the present disclosure;
Fig. 10 is a schematic block diagram of a first pointer control module provided by an embodiment of the present disclosure;
Fig. 11 is a schematic flowchart of a data transmission method for clock domain crossing provided by at least one embodiment of the present disclosure;
Fig. 12 is a schematic block diagram of an electronic device provided by at least one embodiment of the present disclosure; and
Fig. 13 is a schematic diagram of a non-transitory computer-readable storage medium provided by at least one embodiment of the present disclosure.

### DETAILED DESCRIPTION

To clarify the objectives, technical solutions, and advantages of the embodiments of the present disclosure, the technical solutions of the embodiments will be described clearly and completely below in conjunction with the accompanying drawings of the embodiments of the present disclosure. Obviously, the described embodiments are part of the embodiments of the present disclosure, rather than all the embodiments. Based on the described embodiments of the present disclosure, all other embodiments obtained by those of ordinary skill in the art without creative efforts shall fall within the protection scope of the present disclosure.

Unless otherwise defined, the technical terms or scientific terms used in the present disclosure shall have the ordinary meanings understood by those with ordinary skills in the field to which the present disclosure belongs. The terms "first", "second" and similar terms used in the present disclosure do not indicate any order, quantity, or importance, but are only used to distinguish different components. The terms "comprise" or "include" and similar terms mean that the element or item before the term includes the element or item listed after the term and their equivalents, but does not exclude other elements or items. The terms "connect" or "link" and similar terms are not limited to physical or mechanical connections, but may include electrical connections, whether direct or indirect. The terms "upper", "lower", "left", "right" and the like are only used to indicate relative positional relationships, and when the absolute position of the described object changes, the relative positional relationships may also change accordingly.

To keep the following description of the embodiments of the present disclosure clear and concise, the present disclosure omits detailed descriptions of some known functions and known components.

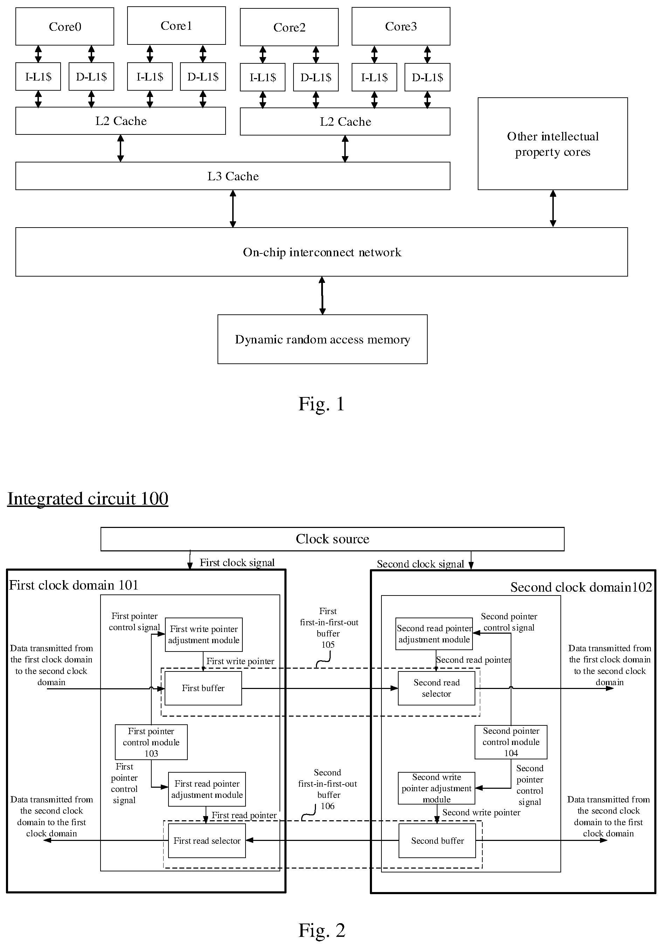

Fig. 1 is a schematic structural diagram of a multi-core chip system. As shown in Fig. 1, the system is a 4-core system-on-chip, which includes four processing cores, three-level caches (L1 cache, L2 cache, and L3 cache) corresponding to the four processing cores respectively, an on-chip interconnect network, a dynamic random access memory, and other intellectual property cores. I-L1$ is a private instruction L1 cache of each processing core and D-L1$ is a private data L1 cache of each processing core. Every two processing cores share one L2 cache, and the four processing cores share the L3 cache. The L3 cache and other intellectual property cores (e.g., direct memory access/video/display, etc.) access the dynamic random access memory through the on-chip interconnect network.

As shown in Fig. 1, in a design of a high-performance processor chip, multiple processing cores may usually share an L3 cache. In order to save power consumption and improve processor performance, Dynamic Voltage and Frequency Scaling (DVFS) technology is often adopted. The processing cores work at different voltages and frequencies under different load scenarios, so the processing cores will switch frequencies continuously. Since the frequency of the processing cores can change, the clock frequencies of the processing cores and the L3 cache can be different, so the interface signals between the processing cores and the L3 cache are asynchronous clock signals.

When data is transmitted across clock domains, meta-stability errors may occur, so signals across clock domains must be processed by cross-clock-domain circuits. This technology is called synchronization processing technology for asynchronous clock signals.

These errors can be alleviated by implementing data transmission through including a meta-stability circuit (e.g., a flip-flop group) between clock domains. However, such meta-stability circuit may increase time delay and require an additional circuit (such as an additional entry of a buffer) to solve control signal delay.

Transmitting data across clock domains by using an asynchronous first-in-first-out buffer (FIFO) can also reduce these errors, but the delay caused by using asynchronous FIFO is also large, which will affect the performance of the processor. Specifically, the asynchronous FIFO circuit judges the empty and full states of the FIFO by comparing the write pointer of one clock domain with the read pointer of another clock domain. Therefore, the asynchronous FIFO needs to synchronize the read pointer (pointing to the next position in the FIFO where data is to be read) or the write pointer (pointing to the next position in the FIFO where data is to be written) from one clock domain to another. The traditional synchronization circuit is implemented by a flip-flop (DFF) of more than 2 stages, and a delay generated by the synchronization circuit will be greater than 2 clock cycles of a target clock domain, which is also an overall data transmission delay of the traditional asynchronous FIFO circuit. For example, when data is transmitted from a fast clock to a slow clock, since a synchronization delay of the pointer from the fast clock domain to the slow clock domain requires more than 2 clock cycles of the slow clock domain, resulting in a large data transmission delay.

In addition, as mentioned above, multiple processing cores often share an L3 cache in a high-performance processor. The processing core is a single-clock-domain digital logic, and its frequency can be increased to a very high level with the improvement of a manufacturing process and the timing optimization of a circuit. The cache in the L3 cache is a custom analog circuit with a large area and long physical wiring of the L3 cache, so it is more difficult to converge a frequency increase of the L3 cache than that of the processing core. Therefore, in some high-performance scenarios, the working frequency of the processing core may be higher than the frequency of the L3 cache. Due to the adoption of DVFS technology, the frequency of the processing core may be higher than the frequency of the L3 cache, and the frequency of the processing core may also be lower than the frequency of the L3 cache. The current cross-clock-domain signal processing usually only supports one frequency relationship, for example, only supports the scenario where the frequency of the processing core is lower than the frequency of the L3 cache, but does not support arbitrary switching of the frequencies of two clock domains.

At least one embodiment of the present disclosure provides an integrated circuit, a data transmission method for clock domain crossing, an electronic device, and a non-transitory computer-readable storage medium.

In at least one embodiment, the integrated circuit includes a first clock domain determined based on a first clock signal and a second clock domain determined based on a second clock signal, where the first clock signal and the second clock signal are same-source clock signals, a frequency of the first clock signal is greater than a frequency of the second clock signal, or the frequency of the first clock signal is less than the frequency of the second clock signal, the first clock domain includes a first pointer control module, the second clock domain includes a second pointer control module, and the first pointer control module is configured to generate a first pointer control signal for the first clock domain, so that a first read pointer and a first write pointer in the first clock domain are adjusted according to the first pointer control signal, where the first pointer control signal is used to indicate an update time point of the first read pointer and the first write pointer; and the second pointer control module is configured to generate a second pointer control signal for the second clock domain, so that a second read pointer and a second write pointer in the second clock domain are adjusted according to the second pointer control signal, where the second pointer control signal is used to indicate an update time point of the second read pointer and the second write pointer; the integrated circuit further includes a first first-in-first-out buffer and a second first-in-first-out buffer, the first first-in-first-out buffer is configured to perform data transmission from the first clock domain to the second clock domain based on the first write pointer and the second read pointer, and the second first-in-first-out buffer is configured to perform data transmission from the second clock domain to the first clock domain based on the first read pointer and the second write pointer; and the first pointer control module includes a first synchronous pointer control module, and the first synchronous pointer control module is configured to: determine, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determine the first pointer control signal based on the phase relationship; and determine, in response to the frequency of the first clock signal being less than the frequency of the second clock signal, the first pointer control signal as a first value, so that the first read pointer and the first write pointer increase by the first value in each clock cycle of the first clock signal.

At least one embodiment of the present disclosure further provides a data transmission method for clock domain crossing, applied to a first clock domain determined based on a first clock signal and a second clock domain determined based on a second clock signal, where the first clock domain includes a first first-in-first-out buffer, the second clock domain includes a second first-in-first-out buffer, the first clock signal and the second clock signal are same-source clock signals, a frequency of the first clock signal is greater than a frequency of the second clock signal, or the frequency of the first clock signal is less than the frequency of the second clock signal, and the data transmission method includes: determining, in the first clock domain, a first pointer control signal, and adjusting a first read pointer and a first write pointer of the first clock domain according to the first pointer control signal, where the first pointer control signal is used to indicate an update time point of the first read pointer and the first write pointer; determining, in the second clock domain, a second pointer control signal, and adjusting a second read pointer and a second write pointer of the second clock domain according to the second pointer control signal, where the second pointer control signal is used to indicate an update time point of the second read pointer and the second write pointer; and performing data transmission from the first clock domain to the second clock domain by using the first first-in-first-out buffer based on the first write pointer and the second read pointer, and performing data transmission from the second clock domain to the first clock domain by using the second first-in-first-out buffer based on the first read pointer and the second write pointer, where determining the first pointer control signal includes: determining, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determining the first pointer control signal based on the phase relationship; and determining, in response to the frequency of the first clock signal being less than the frequency of the second clock signal, the first pointer control signal as a first value, so that the first read pointer and the first write pointer increase by the first value in each clock cycle of the first clock signal.

The integrated circuit and the data transmission method for clock domain crossing provided by at least one embodiment of the present disclosure can support arbitrary switching of the clock frequencies of two asynchronous clock domains, for example, switching from a scenario where the frequency of the first clock domain (e.g., the clock domain of a processing core, etc.) is higher than the frequency of the second clock domain (e.g., the clock domain of an L3 cache, etc.) to a scenario where the frequency of the first clock domain is lower than the frequency of the second clock domain, and conversely, also supports switching from a scenario where the frequency of the first clock domain is lower than the frequency of the second clock domain to a scenario where the frequency of the first clock domain is higher than the frequency of the second clock domain. Therefore, the integrated circuit provided by at least one embodiment of the present disclosure supports DVFS technology, has no restriction on a frequency relationship of the two asynchronous clock domains, and has higher flexibility and wider applicability.

The embodiments of the present disclosure will be described in detail below with reference to the accompanying drawings, but the present disclosure is not limited to these specific embodiments.

Fig. 2 is a schematic block diagram of an integrated circuit provided by at least one embodiment of the present disclosure.

For example, an integrated circuit 100 may be in the form, structure, or function of a chip, a processor, etc. The integrated circuit may be any circuit structure that needs to perform data transmission across clock domains, which is not specifically limited in the present disclosure.

As shown in Fig. 2, the integrated circuit 100 includes a first clock domain 101 determined based on a first clock signal and a second clock domain 102 determined based on a second clock signal. The first clock signal and the second clock signal are same-source clock signals, that is, they are obtained by frequency division of the same clock source, and the frequency division coefficients of the two clock signals are different. Therefore, the phase relationship between the first clock signal and the second clock signal can be completely determined by the frequency division coefficients of the two clock domains, so that a time point when a read pointer and a write pointer of the fast clock signal increase can be known when clock phases of the first clock domain and the second clock domain are obtained.

It should be noted that the integrated circuit 100 may further include a third clock domain, a fourth clock domain, etc., that is, the integrated circuit may include more clock domains. When performing the data transmission across clock domains, two clock domains controlled by asynchronous clocks are selected from the multiple clock domains as the first clock domain and the second clock domain.

In the present disclosure, a clock phase is used to indicate a phase value of a clock signal in each clock cycle. For example, the phase value may be a specific value that increases according to the frequency division coefficient, and returns to 0 to continue increasing after reaching an upper limit.

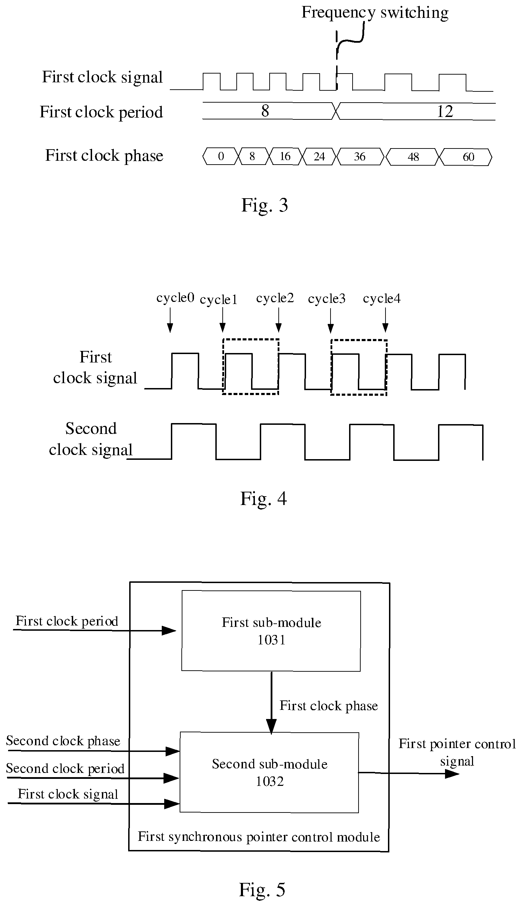

Fig. 3 is a schematic diagram of a clock phase provided by an embodiment of the present disclosure.

As shown in Fig. 3, the first clock signal undergoes frequency switching at the frequency switching moment in Fig. 3, and the frequency division coefficient increases from 8 to 12, so the frequency decreases. As shown in Fig. 3, before the frequency switching, a first clock cycle is represented by a frequency division coefficient of 8; after the frequency switching, the first clock cycle is represented by a frequency division coefficient of 12. A number corresponding to each clock cycle in a first clock phase represents a phase value of each clock cycle. The first clock phase starts from 0, increases by the frequency division coefficient of 8 in each clock cycle, and increases by the frequency division coefficient of 12 in each clock cycle after the frequency switching occurs.

Of course, the above method is an example of representing the clock phase, and the present disclosure is not limited thereto. Other similar methods may also be used to represent the phase value of the clock signal in each clock cycle. For example, since the clock phases need to be compared in the present disclosure, a first clock phase and a second clock phase may be set to have the same value range, for example, both represented by 8-bit width.

For example, in at least one embodiment of the present disclosure, the frequency of the first clock signal may be greater than the frequency of the second clock signal, or the frequency of the first clock signal may be less than the frequency of the second clock signal. That is, the present disclosure has no restriction on a frequency magnitude relationship of two clock domains.

As shown in Fig. 2, the first clock domain includes a first pointer control module 103, and the second clock domain includes a second pointer control module 104.

The first pointer control module 103 is configured to generate a first pointer control signal for the first clock domain 101, so that a first read pointer and a first write pointer in the first clock domain 101 are adjusted according to the first pointer control signal.

For example, a first write pointer adjustment module and a first read pointer adjustment module are used to adjust the first read pointer and the first write pointer according to the first pointer control signal. For example, the first read pointer and the first write pointer may accumulate the currently output first pointer control signal in each clock cycle. Of course, other feasible methods may also be used to adjust the first read pointer and the first write pointer according to the first pointer control signal to reflect the change of the first pointer control signal, which is not specifically limited in the present disclosure.

The second pointer control module 104 is configured to generate a second pointer control signal for the second clock domain 102, so that a second read pointer and a second write pointer in the second clock domain 102 are adjusted according to the second pointer control signal.

For example, a second write pointer adjustment module and a second read pointer adjustment module are used to adjust the second read pointer and the second write pointer according to the second pointer control signal. For example, the second read pointer and the second write pointer may accumulate the second pointer control signal in each clock cycle. Of course, other feasible methods may also be used to adjust the second read pointer and the second write pointer according to the second pointer control signal to reflect the change of the second pointer control signal, which is not specifically limited in the present disclosure.

As shown in Fig. 2, the integrated circuit 100 further includes a first first-in-first-out buffer (FIFO) 105 and a second first-in-first-out buffer (FIFO) 106.

The first first-in-first-out buffer 105 is configured to perform data transmission from the first clock domain to the second clock domain based on the first write pointer and the second read pointer.

As shown in Fig. 2, the first first-in-first-out buffer 105 includes a first buffer and a second read selector. The first buffer is configured to buffer data to be sent to the second clock domain, and a write position of the data is indicated by the first write pointer. The second read selector is configured to select and output the data in a read address indicated by the second read pointer from the data transmitted from the first buffer of the first clock domain to the second clock domain. Thus, data transmission from the first clock domain to the second clock domain is completed through the first write pointer and the second read pointer.

The second first-in-first-out buffer 106 is configured to perform data transmission from the second clock domain to the first clock domain based on the first read pointer and the second write pointer.

As shown in Fig. 2, the second first-in-first-out buffer 106 includes a second buffer and a first read selector. The second buffer is configured to buffer data to be sent to the first clock domain, and a write position of the data is indicated by the second write pointer. The first read selector is configured to select and output the data in a read address indicated by the first read pointer from the data transmitted from the second buffer of the second clock domain to the first clock domain. Thus, data transmission from the second clock domain to the first clock domain is completed through the second write pointer and the first read pointer.

For example, multiple buffer entries of the first buffer are connected to multiple channels of the second read selector in correspondence, and multiple buffer entries of the second buffer are connected to multiple channels of the first read selector in correspondence.

Of course, the integrated circuit may further include more other modules, which is not specifically limited in the present disclosure.

For example, the first pointer control module includes a first synchronous pointer control module, and the first synchronous pointer control module is configured to: determine, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determine the first pointer control signal based on the phase relationship; and determine, in response to the frequency of the first clock signal being less than the frequency of the second clock signal, the first pointer control signal as a first value, so that the first read pointer and the first write pointer increase by the first value in each clock cycle of the first clock signal.

For example, the first pointer control signal is used to determine an update time point of the first read pointer and the first write pointer. For example, when the frequency of the first clock signal is greater than the frequency of the second clock signal, the first pointer control signal is used to indicate whether a rising edge of the second clock signal is located in the current clock cycle of the first clock signal.

The first pointer control module and the second pointer control module have a similar function and structure, except that one is used to generate the first pointer control signal and the other uses similar logic to generate the second pointer control signal.

For example, a second synchronous pointer control module included in the second pointer control module is configured to: determine, in response to the frequency of the second clock signal being greater than the frequency of the first clock signal, a phase relationship between the first clock signal and the second clock signal according to a first clock phase and a first clock cycle of the first clock domain, the second clock signal, and a second clock phase of the second clock domain, and determine the second pointer control signal based on the phase relationship; and determine, in response to the frequency of the second clock signal being less than the frequency of the first clock signal, the second pointer control signal as a first value, so that the second read pointer and the second write pointer increase by the first value in each clock cycle of the second clock signal.

For example, the second pointer control signal is used to determine an update time point of the second read pointer and the second write pointer. For example, when the frequency of the second clock signal is greater than the frequency of the first clock signal, the second pointer control signal is used to indicate whether a rising edge of the first clock signal is located in the current clock cycle of the second clock signal.

The first synchronous pointer control module and the second synchronous pointer control module determine corresponding pointer control values based on the phase relationship between the first clock signal and the second clock signal.

Fig. 4 is a schematic diagram of a phase relationship between a first clock domain and a second clock domain provided by an embodiment of the present disclosure.

As shown in Fig. 4, it is assumed that the first clock signal is frequency-divided by 3, and the second clock signal is frequency-divided by 5. Then, the phase of the first clock signal (first clock phase) in each clock cycle may be represented as 0-3-6-9-12..., and the phase of the second clock signal (second clock phase) in each clock cycle may be represented as 0-5-10-15.... Based on the phase relationship, it can be determined that, for example, the second rising edge of the second clock signal is located in the second clock cycle of the first clock signal (the cycle 1 represented by the block in Fig. 4), and the third rising edge of the second clock signal is located in the fourth clock cycle of the first clock signal (the cycle 3 represented by the block in Fig. 4). For example, the second read pointer and the second write pointer of the second clock domain may be set to increase in each clock cycle, and the first read pointer and the first write pointer of the first clock domain only increase in the cycle 1, the cycle 2, the cycle 4, etc. (increase after judging that the rising edge of the slow clock appears). Thus, cross-clock-domain signal synchronization of the two clock domains is implemented, and data loss on an asynchronous interface is avoided.

In at least one embodiment of the present disclosure, when the frequency of the first clock signal is greater than the frequency of the second clock signal, the first synchronous pointer control module may determine the phase relationship between the first clock signal and the second clock signal according to the second clock phase, the second clock cycle, the first clock signal, and the first clock phase, and determine the first pointer control signal based on the phase relationship, so as to estimate the clock phase of the slow clock domain in the fast clock domain; when the frequency of the first clock signal is less than the frequency of the second clock signal, the first value is accumulated in each clock cycle of the first clock signal, so that the first read pointer and the first write pointer increase at each rising edge of the first clock signal. Thus, even when the frequency changes, an updated phase relationship can be obtained through the first pointer control module, so as to control the read pointer and the write pointer. There is no restriction on a frequency magnitude relationship of two asynchronous clock domains, so that the integrated circuit supports DVFS technology, has no restriction on frequency changes, and has higher flexibility and wider applicability.

Similarly, the second synchronous pointer control module may also use similar logic to obtain the phase relationship, and determine the second read pointer and the second write pointer according to the updated phase relationship when the frequency switching occurs. In addition, the phase relationship is obtained in the clock domain with a higher frequency, and the clock domain with a lower frequency only needs to accumulate the first value in each clock cycle.

For example, the first synchronous pointer control module and the second synchronous pointer control module have the same structure, and each includes a first sub-module and a second sub-module.

Fig. 5 is a schematic diagram of a first synchronous pointer control module provided by an embodiment of the present disclosure.

A first sub-module 1031 of the first synchronous pointer control module is configured to determine the first clock phase according to the first clock cycle (also known as period) of the first clock domain, where the first clock phase is used to indicate a phase value of each clock cycle (cycle) of the first clock signal.

For the description of the first clock phase, reference may be made to the relevant content of Fig. 3, which will not be repeated here.

A second sub-module 1032 of the first synchronous pointer control module is configured to: determine, in response to the frequency of the first clock signal being greater than the frequency of the second clock signal, a phase relationship between the first clock signal and the second clock signal according to the second clock phase and the second clock cycle of the second clock domain, the first clock signal, and the first clock phase of the first clock domain, and determine the first pointer control signal based on the phase relationship, and in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle; and determine, in response to the frequency of the first clock signal being greater than the frequency of the second clock signal, the first pointer control signal as the first value.

For example, in the present disclosure, the clock phase of the slow clock domain is estimated in the fast clock domain. Therefore, when the frequency of the first clock signal is greater than the frequency of the second clock signal, the second sub-module estimates the phase of the slow second clock signal to determine the phase relationship between the first clock signal and the second clock signal, and determines the first pointer control signal based on the phase relationship.

For example, the first pointer control signal at this time may output the first value or the second value in each clock cycle of the first clock signal. When the first value is output, it indicates that a rising edge of the second clock signal is located in the current clock cycle, such as the cycle 1 in Fig. 4; When the second value is output, it indicates that no rising edge of the second clock signal falls into the current clock cycle, such as the cycle 2 in Fig. 4. For example, the first value may be 1, and the second value may be 0.

For example, when the frequency of the first clock signal is greater than the frequency of the second clock signal, the first value may be output in each clock cycle of the first clock signal. For example, at each rising edge of the slow clock signal, the first read pointer and the first write pointer both accumulate the first value, such as accumulating 1.

The second synchronous pointer control module also includes a first sub-module and a second sub-module.

For example, the first sub-module of the second synchronous pointer control module is configured to determine the second clock phase according to the second clock cycle of the second clock domain, where the second clock phase is used to indicate a phase value of each clock cycle of the second clock signal.

For the description of the second clock phase, reference may be made to the relevant content of Fig. 3, which will not be repeated here.

The second sub-module of the second synchronous pointer control module is configured to: determine, in response to the frequency of the second clock signal being greater than the frequency of the first clock signal, a phase relationship between the first clock signal and the second clock signal according to the first clock phase and the first clock cycle of the first clock domain, the second clock signal, and a second clock phase of the second clock domain, and determine the second pointer control signal based on the phase relationship, and in response to the frequency of the second clock signal being greater than the frequency of the first clock signal, the second pointer control signal being the first value indicates that a rising edge of the first clock signal is located in a current clock cycle of the second clock signal, and the second pointer control signal being a second value indicates that no rising edge of the first clock signal is located in the current clock cycle; and determine, in response to the frequency of the second clock signal being greater than the frequency of the first clock signal, the second pointer control signal as the first value.

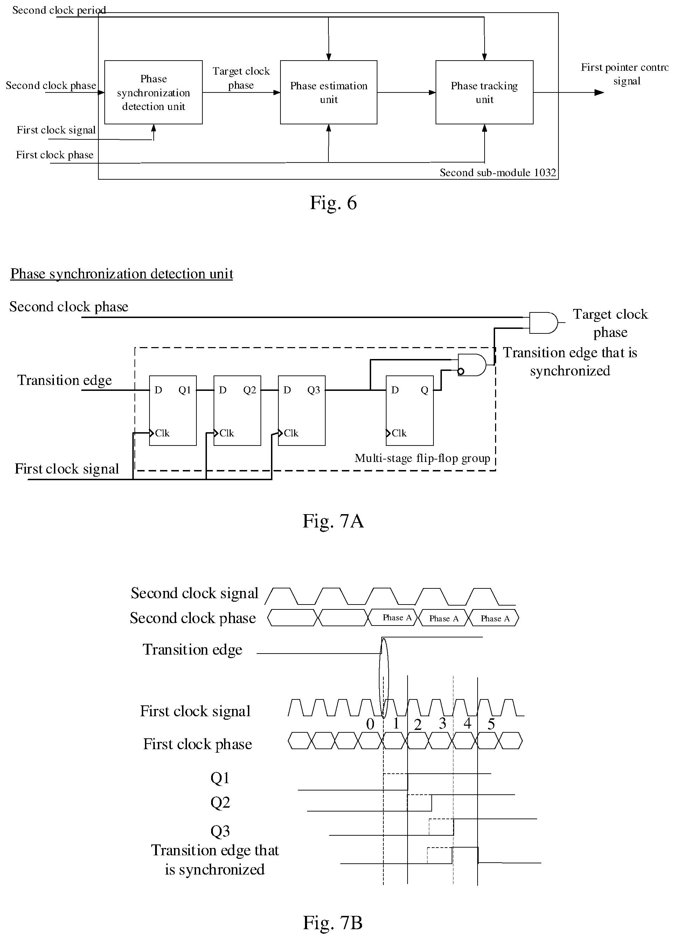

Fig. 6 is a schematic structural diagram of a second sub-module provided by at least one embodiment of the present disclosure.

The structure and function of the second sub-module will be described below by taking the first synchronous pointer control module as an example, and the second sub-module of the second synchronous pointer control module follows the same logic, which will not be repeated here.

As shown in Fig. 6, the second sub-module 1032 includes a phase synchronization detection unit, a phase estimation unit, and a phase tracking unit.

The phase synchronization detection unit is configured to determine a target clock phase in the second clock signal based on the second clock phase and the first clock signal. For example, the target clock phase is a phase value of a clock cycle that is selected in the second clock signal.

Fig. 7A is a schematic structural diagram of a phase synchronization detection unit provided by an embodiment of the present disclosure.

As shown in Fig. 7A, the phase synchronization detection unit includes a multi-stage flip-flop group and an AND gate. The multi-stage flip-flop group is configured to use the first clock signal as a clock to synchronize a transition edge that is selected in the second clock signal, so as to transmit a phase transition signal (the transition edge that is selected) from the slow clock domain to the fast clock domain and avoid meta-stability generated in the synchronization process. The AND gate is configured to perform an AND operation on the transition edge that is synchronized and the second clock phase to obtain a phase value of a clock cycle where the transition edge that is selected is located as the target clock phase, and the target clock phase is a phase value in the second clock phase.

Fig. 7B is a timing diagram of the phase synchronization detection unit shown in Fig. 7A provided by an embodiment of the present disclosure.

As shown in Fig. 7B, the phase value of the clock cycle where the transition edge that is selected is located is phase A. After the transition edge passes through the multi-stage flip-flop group, the transition edge that is synchronized is output. The AND gate performs an AND operation on the transition edge that is synchronized and the second clock phase, so as to obtain the target clock phase, i.e., phase A.

It should be noted that in the phase synchronization detection unit, starting from the transition edge that is selected, the phase of the second clock phase in the subsequent clock cycles is phase A, so that the target clock phase can be obtained. Then, when the next transition edge is selected to perform the above process, the second clock phase is updated to the phase value of the next transition edge.

For example, the phase estimation unit is configured to determine a target clock cycle in the first clock signal corresponding to the target clock phase based on the first clock phase and the second clock cycle, where the target clock phase is located in a phase interval corresponding to the target clock cycle, and the phase interval is determined by a phase value of the target clock cycle and a phase value of the next clock cycle of the target clock cycle.

For example, the phase estimation unit is configured to compare the target clock phase with phase intervals respectively corresponding to a plurality of clock cycles to determine the target clock cycle corresponding to the target clock phase, where the plurality of clock cycles are a plurality of clock cycles in the first clock signal before the transition edge that is synchronized.

For example, taking Fig. 7B as an example, the plurality of clock cycles include four clock cycles before the transition edge that is synchronized, which includes the cycle 0, the cycle 1, the cycle 2, and the cycle 3 in Fig. 7B. The number of clock cycles to be selected may be related to the number of stages of flip-flops in the multi-stage flip-flop group.

For example, first, it is judged whether the target clock phase is located in the phase interval corresponding to the cycle 0. For example, the phase interval corresponding to the cycle 0 is [phase1, phase1+period1], where the phase1 represents the phase value corresponding to the cycle 0, and the period1 is the clock cycle of the first clock signal, for example, represented by a frequency division coefficient.

In response to the phase A falling into the phase interval corresponding to the cycle 0, it is determined that the target clock cycle corresponding to the target clock phase is the cycle 0; and in response to the phase A not falling into the phase interval corresponding to the cycle 0, it is continuously judged whether the phase A falls into the phase interval corresponding to the cycle 1. In response to the phase A falling into the phase interval corresponding to the cycle 1, it is determined that the target clock cycle corresponding to the target clock phase is the cycle 1; and in response to the phase A not falling into the phase interval corresponding to the cycle 1, it is continuously judged whether the phase A falls into the phase interval corresponding to the cycle 2, and so on. Thus, the target clock cycle corresponding to the target clock phase in the first clock signal can be determined. Meanwhile, the rising edge corresponding to the transition edge in the first clock signal, i.e., the rising edge of the target clock cycle, can also be determined.

Thus, in the present disclosure, the corresponding relationship between the rising edge of the first clock signal and that of the second clock signal is indirectly obtained through phase comparison, so as to obtain the phase relationship, so that the pointer control signal is obtained through the phase relationship, and the read pointer and the write pointer are adjusted.

For example, the phase estimation unit is further configured to estimate a phase change of the second clock signal measured by a clock cycle of the first clock signal. For example, the phase estimation unit may further estimate target phases respectively corresponding to a plurality of clock cycles of the first clock signal after the target clock cycle, where each target phase is a phase value in the second clock signal.

For example, taking Fig. 7B as an example, it is assumed that the target clock cycle corresponding to the phase A is determined as the cycle 0, then the phase A is continuously added to the second clock cycle to obtain a phase B to be judged. The phase B is compared with the phase interval corresponding to the cycle 1. In response to the phase B being located in the phase interval corresponding to the cycle 1, it is determined that the target phase corresponding to the cycle 1 is the phase B; and in response to the phase B not being located in the phase interval corresponding to the cycle 1, it is determined that the target phase corresponding to the cycle 1 is the phase A, and so on. Thus, the phase change of the second clock signal measured by the clock cycle of the first clock signal can be obtained. For example, it can be estimated how many first clock cycles the phase A lasts, how many first clock cycles the phase B lasts, etc.

The phase tracking unit is configured to continuously estimate the first pointer control signal output in each current clock cycle of the first clock signal based on the target clock phase and the target clock cycle. For example, the phase tracking unit can continuously judge the first pointer control signal output in each clock cycle after the transition edge that is synchronized.

After the target clock phase and its corresponding target clock cycle are obtained, it can be continuously estimated whether a rising edge of the second clock signal falls into the current clock cycle of the first clock signal based on the corresponding relationship. This way can derive the first pointer control signal in real time with minimal computing resources, without repeatedly using the above method to judge and obtain the pointer control signal.

For example, when the phase tracking unit executes continuous estimation of the first pointer control signal output in each current clock cycle of the first clock signal based on the target clock phase and the target clock cycle, it includes executing the following steps: determine a clock phase that is to-be-estimated based on the target clock phase and the second clock cycle; in the current clock cycle: determine whether the clock phase that is to-be-estimated is located in a phase interval corresponding to the current clock cycle based on the clock phase that is to-be-estimated; in response to the clock phase that is to-be-estimated being located in the phase interval corresponding to the current clock cycle, determine the first pointer control signal as the first value, and update the clock phase that is to-be-estimated based on the second clock cycle; and in response to the clock phase that is to-be-estimated not being located in the phase interval corresponding to the current clock cycle, determine the first pointer control signal as the second value.

For example, the target clock phase is added to the second clock cycle to obtain a clock phase that is to-be-estimated B. For example, when the clock cycle corresponding to the clock phase B has been judged through the above process, the clock phase B can be continuously added to the second clock cycle to obtain a clock phase that is to-be-estimated C.

For example, assuming that the current clock cycle is the cycle 5 in Fig. 7B, for the clock phase that is to-be-estimated C, it is determined whether the clock phase that is to-be-estimated C is located in the phase interval corresponding to the cycle 5. For example, the phase interval corresponding to the cycle 5 is determined by the phase value of the cycle 5 and the phase value of the next clock cycle of the cycle 5.

In response to the clock phase that is to-be-estimated C being located in the phase interval corresponding to the cycle 5, the first pointer control signal is determined as the first value, the second sub-module outputs the first value in the cycle 5, indicating that a rising edge of the second clock signal is located in the cycle 5, and the second clock cycle is added to the clock phase that is to-be-estimated C to update the clock phase that is to-be-estimated to a phase D, and the subsequent judgment is continued.

In response to the clock phase that is to-be-estimated C not being located in the phase interval corresponding to the cycle 5, the first pointer control signal is determined as the second value, indicating that no rising edge of the second clock signal falls into the cycle 5. The above process is continued in the next clock cycle to judge whether the clock phase that is to-be-estimated C is located in the phase interval corresponding to the next clock cycle, which will not be repeated here.

Thus, phase tracking can be performed based on the target clock phase in the second clock signal and the target clock cycle in the first clock signal corresponding to the target clock phase, and an update time point of the subsequent read pointer and write pointer is determined by using the corresponding relationship, so that the pointer control signal indicating whether a rising edge of the second clock signal falls into the current clock cycle can be continuously output in the subsequent clock cycles, so as to continuously update and adjust the read pointer and the write pointer.

In the present disclosure, after frequency switching occurs, the phase relationship between the first clock signal and the second clock signal after the frequency is updated can be determined based on the above process, so as to determine the update time point of the read pointer and the write pointer. There is no restriction on the frequency magnitude relationship of the two clock domains, and the frequency of the first clock domain may be higher than the frequency of the second clock domain, or the frequency of the first clock domain may be lower than the frequency of the second clock domain.

For example, the first read pointer and the first write pointer are adjusted according to the first pointer control signal in each clock cycle of the first clock signal, and the second read pointer and the second write pointer are adjusted according to the second pointer control signal in each clock cycle of the second clock signal.

In response to a data write operation being generated in a write clock cycle of the first clock domain, a data read operation is performed in a read clock cycle in the second clock signal corresponding to the write clock cycle. For example, the data write operation includes writing data to the first first-in-first-out buffer according to the first write pointer, and the data read operation includes reading the data that is written according to the second read pointer.

For example, in response to the frequency of the first clock signal being greater than the frequency of the second clock signal, a rising edge of the second clock signal that is a second clock cycles apart from a rising edge of the read clock cycle is located in the previous clock cycle of the write clock cycle in the first clock signal.

For example, in response to the frequency of the first clock signal being less than the frequency of the second clock signal, a rising edge that is a first clock cycles apart from a rising edge of the write clock cycle is located in the previous clock cycle of the read clock cycle in the second clock signal.

For example, a is a positive integer and is related to the depth of the first first-in-first-out buffer. For example, when the depth of the first first-in-first-out buffer is 3, a may be 1.

In the present disclosure, the read pointer and the write pointer are adjusted in each clock cycle, and the read pointer and the write pointer are in an incremental cycle state. To ensure that no conflict occurs between reading and writing, in at least one embodiment of the present disclosure, it is set that when a data write operation occurs at a certain rising edge (a rising edge m) of the slow clock domain, a data read operation is performed in a read clock cycle of the fast clock signal, and a rising edge of the slow clock signal that is a clock cycles apart from the rising edge m is located in the previous clock cycle of the read clock cycle.

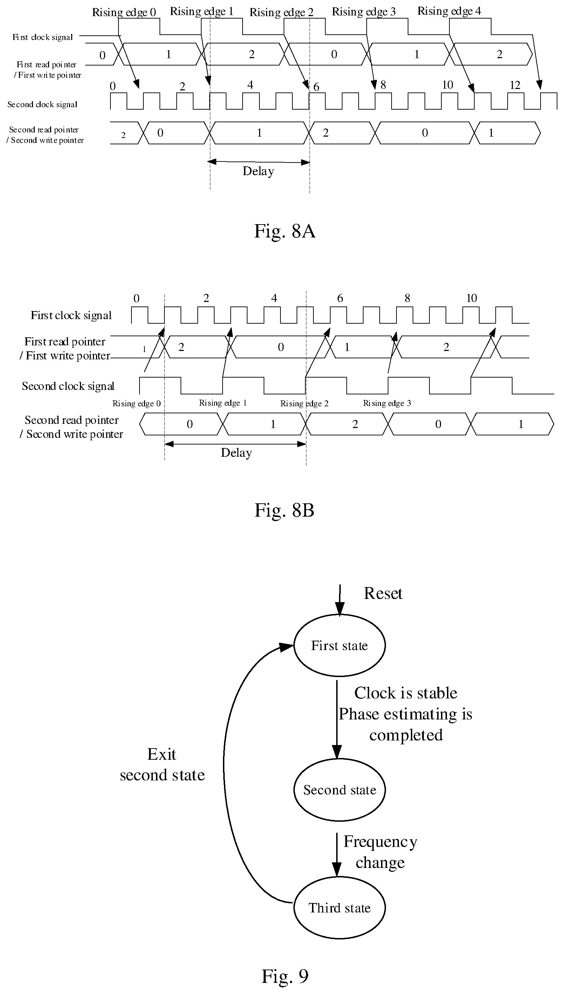

Fig. 8A is a timing diagram of a data transmission process across clock domains provided by an embodiment of the present disclosure.

As shown in Fig. 8A, it is assumed that the frequency of the first clock signal is less than the frequency of the second clock signal, the depth of the first first-in-first-out buffer is 3, the first pointer control signal outputs 1 in each clock cycle, and the first read pointer and the first write pointer increase by 1 in each clock cycle. As shown in Fig. 8A, the first read pointer and the first write pointer cycle with 0, 1, 2.

As shown in Fig. 8A, the rising edge 0 of the first clock signal is located in the cycle 0 of the second clock signal, so a second pointer control signal 1 is output in the cycle 0 of the second clock signal, and the second read pointer and the second write pointer increase by 1 from 2 to 0 in the cycle 1 of the second clock signal. The rising edge 1 of the first clock signal is located in the cycle 2 of the second clock signal, so the second pointer control signal 1 is output in the cycle 2 of the second clock signal, and the second read pointer and the second write pointer increase by 1 from 0 to 1 in the cycle 3 of the second clock signal. The rising edge 2 of the first clock signal is located in the cycle 5 of the second clock signal, so the second pointer control signal 1 is output in the cycle 5 of the second clock signal, and the second read pointer and the second write pointer increase by 1 from 1 to 2 in the cycle 6 of the second clock signal. The subsequent process is analogous, which will not be repeated here.

Therefore, as shown in Fig. 8A, assuming that a data write operation occurs at the rising edge 0, the data at the write position 1 needs to be read out in the cycle 3 of the second clock signal. Assuming that a data write operation occurs at the rising edge 1, the data at the write position 2 needs to be read out in the cycle 6 of the second clock signal, thereby avoiding data read-write conflicts, and the read pointer and the write pointer can change according to the pointer control signal in each clock cycle without considering data write and read requests.

In addition, as shown in Fig. 8A, the delay caused by the above data transmission across clock domains is less than 2 clock cycles of the slow clock domain. Compared with the traditional data transmission method using multi-stage flip-flops for synchronization, the synchronization processing delay of asynchronous clock signals can be reduced.

In at least one embodiment of the present disclosure, it is set that when a data write operation occurs at a certain rising edge (a rising edge n) of the fast clock domain, a data read operation is performed in a read clock cycle of the slow clock signal, and a rising edge of the slow clock signal that is a+1 slow clock cycles apart from a rising edge of the read clock cycle is located in the previous clock cycle of the write clock cycle in the fast clock signal.

Fig. 8B is a timing diagram of a data transmission process across clock domains provided by another embodiment of the present disclosure.

As shown in Fig. 8B, it is assumed that the frequency of the first clock signal is greater than the frequency of the second clock signal, the depth of the first first-in-first-out buffer is 3, the second pointer control signal outputs 1 in each clock cycle, and the second read pointer and the second write pointer increase by 1 in each clock cycle. As shown in Fig. 8B, the second read pointer and the second write pointer cycle with 0, 1, 2.

As shown in Fig. 8B, the rising edge 0 of the second clock signal is located in the cycle 0 of the first clock signal, so the first pointer control signal 1 is output in the cycle 0 of the first clock signal, and the first read pointer and the first write pointer increase by 1 from 1 to 2 in the cycle 1 of the first clock signal. The rising edge 1 of the second clock signal is located in the cycle 2 of the first clock signal, so the first pointer control signal 1 is output in the cycle 2 of the first clock signal, and the first read pointer and the first write pointer increase by 1 from 2 to 0 in the cycle 3 of the first clock signal. The rising edge 2 of the second clock signal is located in the cycle 5 of the first clock signal, so the first pointer control signal 1 is output in the cycle 5 of the first clock signal, and the first read pointer and the first write pointer increase by 1 from 0 to 1 in the cycle 6 of the first clock signal. The subsequent process is analogous, which will not be repeated here.

Therefore, as shown in Fig. 8B, assuming that a data write operation occurs in the cycle 1 of the first clock signal, the data at the write position 2 needs to be read out at the rising edge 2 of the second clock signal. Assuming that a data write operation occurs in the cycle 3 of the first clock signal, the data at the write position 0 needs to be read out at the rising edge 3 of the second clock signal, thereby avoiding data read-write conflicts, and the read pointer and the write pointer can change according to the pointer control signal in each clock cycle without considering data write and read requests.

As shown in Fig. 8B, the delay caused by the above data transmission across clock domains is less than 2 clock cycles of the slow clock domain. Compared with the traditional data transmission method using multi-stage flip-flops for synchronization (which at least causes a delay greater than 2 clock cycles of the target clock domain due to the synchronizer), the synchronization processing delay of asynchronous clock signals can be reduced.

Of course, it should be noted that the above pointer adjustment process is described by taking the write operation occurring in the first clock domain and the read operation occurring in the second clock domain as an example. The pointer adjustment logic for the write operation occurring in the second clock domain and the read operation occurring in the first clock domain is similar, which will not be repeated here.

In the present disclosure, the clock signals are same-source clock signals, so the phase relationship between two clock domains can be determined by frequency division coefficients, thereby determining update time points of the read pointer and the write pointer of the two clock domains, and reducing the synchronization processing delay of asynchronous clock signals.

As mentioned above, the high-performance processors adopt DVFS technology, and the processing cores adopt different voltages and frequencies according to different loads during working process. For example, when the workload of a certain processing core is small, the voltage and frequency can be reduced to a very low level to save power consumption; when the workload of a certain processing core is large, both the voltage and frequency can be increased. Data processing across clock domains is prone to errors during the frequency switching. Currently, data transmission is usually stopped during the frequency switching, but when data transmission is stopped during the frequency switching, the performance of the high-performance processors will be affected.

In the integrated circuit provided by at least one embodiment of the present disclosure, the first clock domain further includes a first state machine and a first asynchronous pointer control module, and the second clock domain further includes a second state machine and a second asynchronous pointer control module.

For example, the first asynchronous pointer control module and the second asynchronous pointer control module each includes a multi-stage flip-flop, and the first asynchronous pointer control module and the second asynchronous pointer control module perform synchronization of the first write pointer, the first read pointer, the second write pointer, and the second read pointer between different clock domains through the respective multi-stage flip-flops.

For example, the first asynchronous pointer control module and the second asynchronous pointer control module judge the empty and full states of the first first-in-first-out buffer or the second first-in-first-out buffer by comparing the write pointer of one clock domain with the read pointer of another clock domain. Therefore, the asynchronous pointer control module needs to synchronize the read pointer (pointing to the next position in the first-in-first-out buffer where data is to be read) or the write pointer (pointing to the next position in the first-in-first-out buffer where data is to be written) from one clock domain to another clock domain. Different from the synchronous pointer control module, in the asynchronous pointer control module, the synchronization of pointers is implemented by a synchronizer, which usually includes a multi-stage flip-flop. The pointer value of another clock domain is stably reflected by using the multi-stage flip-flop, so as to avoid meta-stability problems. When comparing pointers, these stable register values are used instead of directly comparing pointers across clock domains. Although the asynchronous pointer control module may cause more delays, the asynchronous pointer control module can still maintain data transmission across clock domains during the frequency switching.

For example, the asynchronous pointer control module may adopt a conventional structure to perform the data transmission across clock domains by using an asynchronous FIFO, which will not be repeated here.

For example, the first state machine is configured to control, when frequency switching occurs, the first clock domain to use the first asynchronous pointer control module to perform the data transmission across clock domains, and control, after the frequency switching is completed and phase estimating is completed, the first clock domain to use the first synchronous pointer control module to perform the data transmission across clock domains.

The second state machine is configured to control, when frequency switching occurs, the second clock domain to use the second asynchronous pointer control module to perform the data transmission across clock domains, and control, after the frequency switching is completed and the phase estimating is completed, the second clock domain to use the second synchronous pointer control module to perform the data transmission across clock domains.

Fig. 9 is a schematic diagram of state switching of a state machine provided by an embodiment of the present disclosure.

As shown in Fig. 9, the integrated circuit is in a reset state when reset or initially powered on, and then enters a first state. At this time, the frequency is still changing and not stable. In the first state, the first asynchronous pointer control module, the second asynchronous pointer control module, the first first-in-first-out buffer, and the second first-in-first-out buffer are used to perform the data transmission across clock domains.

After the frequency switching is completed and the phase estimating is completed, for example, when the clock is stable and the phase estimating is completed by the first pointer control module or the second pointer control module, and outputs the first pointer control signal or the second pointer control signal, a second state is entered. In the second state, the first synchronous pointer control module, the second synchronous pointer control module, the first first-in-first-out buffer, and the second first-in-first-out buffer are used to perform the data transmission across clock domains.

When frequency switching occurs again, the second state is exited, the third state is entered, and finally the first state is returned. At this time, the first asynchronous pointer control module, the second asynchronous pointer control module, the first first-in-first-out buffer, and the second first-in-first-out buffer are used to perform the data transmission across clock domains, and the above process is repeated.

The first state machine and the second state machine are further configured to receive first indication information indicating whether the frequency switching is completed, and second indication information indicating a frequency magnitude relationship between the first clock signal and the second clock signal; in response to the first indication information indicating that frequency switching occurs, the first state machine controls the first clock domain to use the first asynchronous pointer control module to perform the data transmission across clock domains, and the second state machine controls the second clock domain to use the second asynchronous pointer control module to perform the data transmission across clock domains; and the first state machine and the second state machine are further configured to determine whether the frequency switching is completed and the phase estimating is completed according to the first indication information and the second indication information.

For example, when the first state machine executes determination of whether the frequency switching is completed and phase estimating is completed according to the first indication information and the second indication information, it includes executing the following operations: in response to the first indication information indicating that the frequency switching is completed, and the second indication information indicating that the frequency of the first clock signal is greater than the frequency of the second clock signal: the first state machine controls the first synchronous pointer control module to perform the phase estimating to obtain the phase relationship and determine the first pointer control signal based on the phase relationship; in response to the phase estimating being completed by the first synchronous pointer control module, determine that the frequency switching is completed and phase estimating is completed; and the first state machine is further configured to perform synchronous handshaking with the second state machine, so that the second state machine controls the second clock domain to use the second synchronous pointer control module to perform data transmission across clock domains; and in response to the first indication information indicating that the frequency switching is completed, and the second indication information indicating that the frequency of the first clock signal is less than the frequency of the second clock signal: after synchronous handshaking with the second state machine is completed, determine that the frequency switching is completed and the phase estimating is completed.

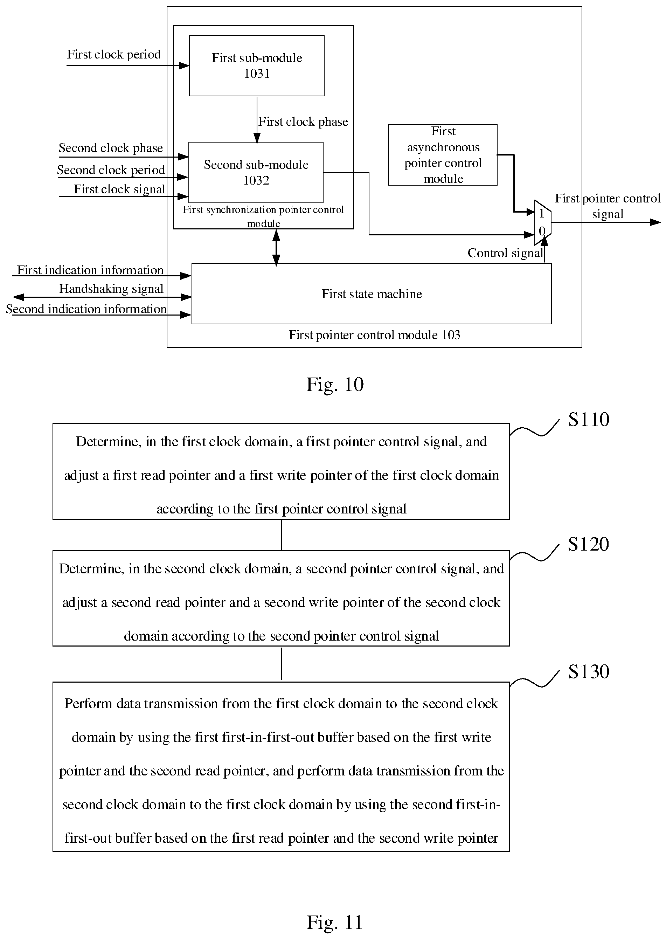

Fig. 10 is a schematic block diagram of a first pointer control module provided by an embodiment of the present disclosure.

It should be noted that the second pointer control module also has a similar structure, which includes, for example, the second state machine, the second asynchronous pointer control module, and the second synchronous pointer control module, and the specific content will not be repeated.

As shown in Fig. 10, the first state machine receives the first indication information and the second indication information, judges whether the state needs to be switched according to the first indication information and the second indication information, and outputs different control signals to switch between using the first synchronous pointer control module or the first asynchronous pointer control module to generate the first pointer control signal.

For example, in a case where the chip is reset or the frequency is unstable, the first indication information indicates that the frequency switching is not completed, and it is in the first state at this time. The first state machine outputs a control signal 1, and the first pointer control signal output by the first asynchronous pointer control module is used to adjust the first read pointer and the first write pointer. For example, when the first asynchronous pointer control module is used, the first pointer control signal includes a control signal for the first read pointer and a control signal for the first write pointer, which are used to adjust the first read pointer and the first write pointer respectively.

When the first indication information indicates that the chip frequency switching is completed, it is determined according to the second indication information whether the frequency of the first clock domain is greater than the frequency of the second clock domain.

In response to the frequency of the first clock domain being greater than the frequency of the second clock domain, the first state machine controls the first synchronous pointer control module to perform the phase estimating according to the above process, which includes determining the phase relationship and determining the first pointer control signal based on the phase relationship. For the specific process, reference may be made to the relevant description of the first synchronous pointer control module above, which will not be repeated here. After the phase estimating is completed by the first synchronous pointer control module, it is determined that the frequency switching is completed and the phase estimating is completed, and the second state is entered. At this time, the first state machine outputs a control signal 0, and the first pointer control signal output by the first synchronous pointer control module is used to adjust the first read pointer and the first write pointer. In addition, the first state machine is further configured to perform synchronous handshaking with the second state machine, so that the second state machine controls the second clock domain to use the second synchronous pointer control module to perform the data transmission across clock domains. For the second synchronous pointer control module, the output second pointer control signal is the first value. Thus, both clock domains enter the synchronous pointer control logic.

When the first indication information indicates that the chip frequency switching is completed, in response to the frequency of the first clock domain being less than the frequency of the second clock domain, the first state machine waits for a handshake signal from the second state machine. At this time, the second state machine controls the second synchronous pointer control module to perform the phase estimating according to the above process. Specifically, the second state machine also determines that the frequency switching is completed and the frequency of the second clock signal is greater than the frequency of the first clock signal according to the first indication information and the second indication information that are received, and the second state machine controls the second synchronous pointer control module to perform the phase estimating, which includes determining the phase relationship and determining the second pointer control signal based on the phase relationship. After the phase estimating is completed by the second synchronous pointer control module, it is determined that the frequency switching is completed and the phase estimating is completed, and the second state is entered. At this time, the second state machine outputs the control signal 0, and the second pointer control signal output by the second synchronous pointer control module is used to adjust the second read pointer and the second write pointer. In addition, the second state machine is further configured to perform synchronous handshaking with the first state machine. After synchronous handshaking with the second state machine is completed by the first state machine, the first state machine determines that the frequency switching is completed and the phase estimating is completed, and controls the first clock domain to use the first synchronous pointer control module to perform the data transmission across clock domains. For the first synchronous pointer control module, the output first pointer control signal is the first value. Thus, both clock domains enter the synchronous pointer control logic.

When the first indication information indicates that the chip frequency switches again, both the first state machine and the second state machine exit the second state and enter the third state, and finally return to the first state. Both the first state machine and the second state machine output the control signal 1 to switch to their respective asynchronous pointer control modules, and continue to use the asynchronous pointer control modules to adjust the read pointer and the write pointer until entering the second state again.

The integrated circuit provided by at least one embodiment of the present disclosure can switch the synchronous pointer control modules to the asynchronous pointer control modules during dynamic frequency switching, use the asynchronous pointer control modules to implement clock signal synchronization during frequency switching, and can jointly use the synchronous pointer control modules again through a synchronous handshaking mechanism after the frequency switching is completed and the phase estimating is completed. Thus, data transmission is maintained during dynamic frequency switching, low-delay cross-clock processing is maintained after the frequency is stable, data transmission can be performed during the entire operation cycle of the integrated circuit, the performance of the processor is improved, and there is no need to suspend data transmission due to frequency switching.

Fig. 11 is a schematic flowchart of a data transmission method for clock domain crossing provided by at least one embodiment of the present disclosure.

For example, the data transmission method for clock domain crossing is applied to a first clock domain determined based on a first clock signal and a second clock domain determined based on a second clock signal, where the first clock domain includes a first first-in-first-out buffer, the second clock domain includes a second first-in-first-out buffer, the first clock signal and the second clock signal are same-source clock signals, and the frequency of the first clock signal is greater than the frequency of the second clock signal, or the frequency of the first clock signal is less than the frequency of the second clock signal.

For example, the data transmission method for clock domain crossing can be applied to an integrated circuit which includes different clock domains. For the description of the clock domains and the integrated circuit, reference may be made to the relevant parts above, which will not be repeated here.

For example, as shown in Fig. 11, the data transmission method for clock domain crossing provided by the embodiments of the present disclosure includes steps S110 to S130.

In step S110, determine, in the first clock domain, a first pointer control signal, and adjust a first read pointer and a first write pointer of the first clock domain according to the first pointer control signal.

For example, the first pointer control signal is used to indicate an update time point of the first read pointer and the first write pointer.

For the specific process of adjusting the first read pointer and the first write pointer by using the first pointer control signal, reference may be made to the relevant description in the integrated circuit above, and the repeated parts will not be repeated.

In step S120, determine, in the second clock domain, a second pointer control signal, and adjust a second read pointer and a second write pointer of the second clock domain according to the second pointer control signal.

For example, the second pointer control signal is used to indicate an update time point of the second read pointer and the second write pointer.

For the specific process of adjusting the second read pointer and the second write pointer by using the second pointer control signal, reference may be made to the relevant description in the integrated circuit above, and the repeated parts will not be repeated.

In step S130, perform data transmission from the first clock domain to the second clock domain by using the first first-in-first-out buffer based on the first write pointer and the second read pointer, and perform data transmission from the second clock domain to the first clock domain by using the second first-in-first-out buffer based on the first read pointer and the second write pointer.

For example, in some embodiments, determining the first pointer control signal may include: determining, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determining the first pointer control signal based on the phase relationship; and determining, in response to the frequency of the first clock signal being less than the frequency of the second clock signal, the first pointer control signal as a first value, so that the first read pointer and the first write pointer increase by the first value in each clock cycle of the first clock signal.

For example, in some embodiments, determining the second pointer control signal may include: determining, in response to the frequency of the second clock signal being greater than the frequency of the first clock signal, the phase relationship between the first clock signal and the second clock signal according to the first clock phase and a first clock cycle of the first clock domain, the second clock signal, and the second clock phase of the second clock domain, and determining the second pointer control signal based on the phase relationship; determining, in response to the frequency of the second clock signal being less than the frequency of the first clock signal, the second pointer control signal as the first value, so that the second read pointer and the second write pointer increase by the first value in each clock cycle of the second clock signal.

The determination manner of the second pointer control signal is similar to the determination manner of the first pointer control signal. The following takes the first pointer control signal as an example to specifically describe the process of determining the first pointer control signal, and the process of determining the second pointer control signal can be adaptively adjusted with reference to the determination process of the first pointer control signal, which will not be repeated here.

For example, determining the first pointer control signal may further include: determining the first clock phase according to the first clock cycle of the first clock domain, where the first clock phase is used to indicate a phase value of each clock cycle of the first clock signal.

For example, in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle.

For example, determining the phase relationship between the first clock signal and the second clock signal according to the second clock phase and the second clock cycle of the second clock domain, the first clock signal, and the first clock phase, and determining the first pointer control signal based on the phase relationship may include: determining a target clock phase in the second clock signal based on the second clock phase and the first clock signal, where the target clock phase is a phase value of a clock cycle that is selected in the second clock signal; determining a target clock cycle in the first clock signal corresponding to the target clock phase based on the first clock phase and the second clock cycle, where the target clock phase is located in a phase interval corresponding to the target clock cycle, and the phase interval is determined by a phase value of the target clock cycle and a phase value of a next clock cycle of the target clock cycle; and continuously estimating the first pointer control signal output in each current clock cycle of the first clock signal based on the target clock phase and the target clock cycle.

For example, for the process of determining the target clock phase, reference may be made to the relevant description of the phase estimation unit above, which will not be repeated here.

For example, determining the phase relationship between the first clock signal and the second clock signal according to the second clock phase and the second clock cycle of the second clock domain, the first clock signal, and the first clock phase, and determining the first pointer control signal based on the phase relationship may further include: estimating a phase change of the second clock signal measured by a clock cycle of the first clock signal.

For the specific implementation process of estimating the phase change, reference may be made to the relevant description of the phase estimation unit above, which will not be repeated here.

For example, in some embodiments, continuously estimating the first pointer control signal output in each current clock cycle of the first clock signal based on the target clock phase and the target clock cycle may include: determining a clock phase that is to-be-estimated based on the target clock phase and the second clock cycle; in the current clock cycle: determining whether the clock phase that is to-be-estimated is located in a phase interval corresponding to the current clock cycle based on the clock phase that is to-be-estimated; determining, in response to the clock phase that is to-be-estimated being located in the phase interval corresponding to the current clock cycle, the first pointer control signal output in the current clock cycle as the first value, and updating the clock phase that is to-be-estimated based on the second clock cycle; and determining, in response to the clock phase that is to-be-estimated not being located in the phase interval corresponding to the current clock cycle, the first pointer control signal output in the current clock cycle as the second value.

For the specific process of the above continuous estimation of the first pointer control signal, reference may be made to the relevant description of the phase tracking unit above, and the repeated parts will not be repeated.

For example, the first read pointer and the first write pointer are adjusted according to the first pointer control signal in each clock cycle of the first clock signal, and the second read pointer and the second write pointer are adjusted according to the second pointer control signal in each clock cycle of the second clock signal; in response to a data write operation being generated in a write clock cycle of the first clock domain, a data read operation is performed in a read clock cycle in the second clock signal corresponding to the write clock cycle, where in response to the frequency of the first clock signal being greater than the frequency of the second clock signal, a rising edge of the second clock signal that is a+1 second clock cycles apart from a rising edge of the read clock cycle is located in the previous clock cycle of the write clock cycle in the first clock signal, and in response to the frequency of the first clock signal being less than the frequency of the second clock signal, a rising edge that is a first clock cycles apart from a rising edge of the write clock cycle is located in the previous clock cycle of the read clock cycle, and a is a positive integer.

In the present disclosure, after frequency switching occurs, the phase relationship between the first clock signal and the second clock signal after the frequency is updated can be determined based on the above process, so as to determine the update time point of the read pointer and the write pointer. There is no restriction on the frequency magnitude relationship of two clock domains, and the frequency of the first clock domain may be higher than the frequency of the second clock domain, or the frequency of the first clock domain may be lower than the frequency of the second clock domain. In addition, the clock signals are same-source clock signals, so the phase relationship between two clock domains can be determined by the frequency division coefficients, thereby determining the update time points of the read pointer and the write pointer of the two clock domains, and reducing the synchronization processing delay of asynchronous clock signals.

For example, in at least one embodiment of the present disclosure, the data transmission method for clock domain crossing further include: controlling, when frequency switching occurs, the first clock domain and the second clock domain to use an asynchronous pointer control logic to perform data transmission across clock domains; controlling, after the frequency switching is completed and phase estimating is completed, the first clock domain and the second clock domain to use a synchronous pointer control logic to perform the data transmission across clock domains; the asynchronous pointer control logic includes synchronizing the first write pointer, the first read pointer, the second write pointer, and the second read pointer between different clock domains through a multi-stage flip-flop; the synchronous pointer control logic includes obtaining the phase relationship and performing the data transmission across clock domains based on the phase relationship.

For example, for the asynchronous pointer control logic, reference may be made to the relevant description of the asynchronous pointer control module above, and the asynchronous pointer control logic can implement the relevant functions of the asynchronous pointer control module. For the synchronous pointer control logic, reference may be made to the relevant description of the synchronous pointer control module above, and the synchronous pointer control logic can implement the relevant functions of the synchronous pointer control module.

For example, in some embodiments, controlling the first clock domain to use the asynchronous pointer control logic to perform the data transmission across clock domains when frequency switching occurs may include: controlling, in response to first indication information that is received indicating that frequency switching occurs, the first clock domain to use the asynchronous pointer control logic to perform the data transmission across clock domains.

For example, in some embodiments, the data transmission method further include: determining whether the frequency switching is completed and the phase estimating is completed according to the first indication information and the second indication information, where the second indication information is used to indicate a frequency magnitude relationship between the first clock signal and the second clock signal.

For example, in some embodiments, determining whether the frequency switching is completed and the phase estimating is completed according to the first indication information and the second indication information may include: in response to the first indication information indicating that the frequency switching is completed, and the second indication information indicating that the frequency of the first clock signal is greater than the frequency of the second clock signal: performing the phase estimating to obtain the phase relationship and determining the first pointer control signal based on the phase relationship; in response to determining the first pointer control signal, determining that the frequency switching is completed and the phase estimating is completed; and performing state synchronization with the second clock domain, so that the second clock domain adjusts the pointer according to a second pointer control signal that is determined to perform the data transmission across clock domains; in response to the first indication information indicating that the frequency switching is completed, and the second indication information indicating that the frequency of the first clock signal is less than the frequency of the second clock signal: after performing state synchronization with the second clock domain, determining that the frequency switching is completed and the phase estimating is completed; and adjusting the pointer according to the determined first pointer control signal to perform the data transmission across clock domains.

For the specific description of the above process, reference may be made to the relevant content of the integrated circuit above, which will not be repeated here.

The data transmission method for clock domain crossing provided by at least one embodiment of the present disclosure can switch the synchronous pointer control modules to the asynchronous pointer control modules during dynamic frequency switching, use the asynchronous pointer control modules to implement clock signal synchronization during frequency switching, and can jointly use the synchronous pointer control modules again through a synchronous handshaking mechanism after the frequency switching is completed and the phase estimating is completed. Thus, data transmission is maintained during dynamic frequency switching, and low-delay cross-clock processing is maintained after the frequency is stable.

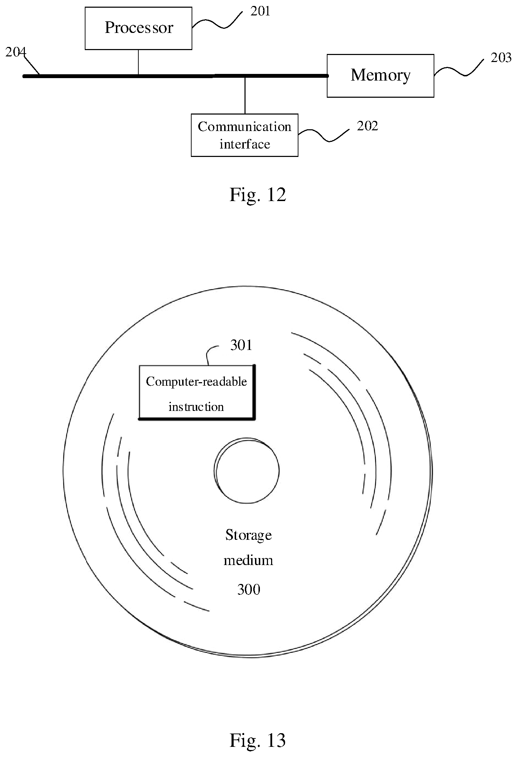

At least one embodiment of the present disclosure further provides an electronic device. Fig. 12 is a schematic block diagram of an electronic device provided by at least one embodiment of the present disclosure.

For example, as shown in Fig. 12, the electronic device includes a processor 201, a communication interface 202, a memory 203, and a communication bus 204. The processor 201, the communication interface 202, and the memory 203 communicate with each other through the communication bus 204, and components such as the processor 201, the communication interface 202, and the memory 203 may also communicate through a network connection. The present disclosure has no restriction on the type and function of the network.

For example, the memory 203 is used for non-transitorily storing a computer-executable instruction. The processor 201 is used to run the computer-executable instruction, and when the computer-executable instruction is run by the processor 201, the data transmission method for clock domain crossing according to any of the above embodiments is implemented. For the specific implementation of each step of the data transmission method for clock domain crossing and the relevant explanation content, reference may be made to the embodiments of the data transmission method for clock domain crossing above, which will not be repeated here.

For example, the implementation manner of the processor 201 implementing the data transmission method for clock domain crossing by executing the program stored on the memory 203 is the same as the implementation manner mentioned in the embodiment of the data transmission method for clock domain crossing above, which will not be repeated here.

For example, the communication bus 204 may be a Peripheral Component Interconnect (PCI) bus or an Extended Industry Standard Architecture (EISA) bus, etc. The communication bus may be divided into an address bus, a data bus, a control bus, etc. For the convenience of representation, only one thick line is used to represent it in the figure, but it does not mean that there is only one bus or one type of bus.

For example, the communication interface 202 is used to implement communication between the electronic device and other devices.

For example, the processor 201 can control other components in the electronic device to perform a desired function. The processor 201 may be a Central Processing Unit (CPU), a Network Processor (NP), etc., and may also be a Digital Signal Processor (DSP), an Application Specific Integrated Circuit (ASIC), a Field Programmable Gate Array (FPGA) or other programmable logic devices, discrete gate or transistor logic devices, discrete hardware components. The Central Processing Unit (CPU) may be of X86 or ARM architecture, etc.

For example, the memory 203 may include any combination of one or more computer program products, and the computer program product may include various forms of computer-readable storage medium, such as volatile memory and/or non-volatile memory. The volatile memory may include, for example, Random Access Memory (RAM) and/or cache, etc. The non-volatile memory may include, for example, Read-Only Memory (ROM), a hard disk, an Erasable Programmable Read-Only Memory (EPROM), a portable Compact Disc Read-Only Memory (CD-ROM), a USB memory, a flash memory, etc. One or more computer-executable instructions may be stored on the computer-readable storage medium, and the processor 201 may run the computer-executable instruction to implement various functions of the electronic device. Various application programs and various data, etc., may also be stored in the storage medium.

For example, for the detailed description of the process of the electronic device executing data transmission across clock domains, reference may be made to the relevant description in the embodiment of the data transmission method for clock domain crossing above, and the repeated parts will not be repeated.

Fig. 13 is a schematic diagram of a non-transitory computer-readable storage medium provided by at least one embodiment of the present disclosure. For example, as shown in Fig. 13, one or more computer-executable instructions 301 may be non-transitorily stored on a storage medium 300. For example, when the computer-executable instructions 301 are executed by a processor, one or more steps in the data transmission method for clock domain crossing according to the above may be executed.

For example, the storage medium 300 may be applied to the electronic device above. For example, the storage medium 300 may include the memory 203 in the electronic device.

For example, for the description of the storage medium 300, reference may be made to the description of the memory in the embodiment of the electronic device above, and the repeated parts will not be repeated.

For the present disclosure, the following points need to be noted:
(1) The accompanying drawings of the embodiments of the present disclosure only relate to the structures involved in the embodiments of the present disclosure, and other structures may refer to the conventional design.
(2) For clarity, the thickness and size of layers or structures are enlarged in the drawings used to describe the embodiments of the present disclosure. It can be understood that when an element such as a layer, film, region, or substrate is referred to as being "on" or "under" another element, it can be "directly" on or "directly" under the other element, or an intermediate element may exist.
(3) Embodiments of the present disclosure and features in the embodiments may be combined with each other to form new embodiments without conflict.

The above is only the specific implementation of the present disclosure, but the protection scope of the present disclosure is not limited thereto. The protection scope of the present disclosure shall be subject to the protection scope of the claims.

## Claims

1. An integrated circuit, comprising a first clock domain determined based on a first clock signal and a second clock domain determined based on a second clock signal, wherein the first clock signal and the second clock signal are same-source clock signals, a frequency of the first clock signal is greater than a frequency of the second clock signal, or the frequency of the first clock signal is less than the frequency of the second clock signal,
the first clock domain comprises a first pointer control module, the second clock domain comprises a second pointer control module,
the first pointer control module is configured to generate a first pointer control signal for the first clock domain, so that a first read pointer and a first write pointer in the first clock domain are adjusted according to the first pointer control signal, wherein the first pointer control signal is used to indicate an update time point of the first read pointer and an update time point of the first write pointer;
the second pointer control module is configured to generate a second pointer control signal for the second clock domain, so that a second read pointer and a second write pointer in the second clock domain are adjusted according to the second pointer control signal, wherein the second pointer control signal is used to indicate an update time point of the second read pointer and an update time point of the second write pointer;
the integrated circuit further comprises a first first-in-first-out buffer and a second first-in-first-out buffer,
the first first-in-first-out buffer is configured to perform data transmission from the first clock domain to the second clock domain based on the first write pointer and the second read pointer,
the second first-in-first-out buffer is configured to perform data transmission from the second clock domain to the first clock domain based on the first read pointer and the second write pointer; and
the first pointer control module comprises a first synchronous pointer control module, and the first synchronous pointer control module is configured to:
determine, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determine the first pointer control signal based on the phase relationship; and
determine, in response to the frequency of the first clock signal being less than the frequency of the second clock signal, the first pointer control signal as a first value, so that the first read pointer and the first write pointer increase by the first value in each clock cycle of the first clock signal.

2. The integrated circuit according to claim 1, wherein the first synchronous pointer control module and a second synchronous pointer control module comprised in the second pointer control module have a same structure, each of the first synchronous pointer control module and the second synchronous pointer control module comprises a first sub-module and a second sub-module,
a first sub-module of the first synchronous pointer control module is configured to determine the first clock phase according to a first clock cycle of the first clock domain, wherein the first clock phase is used to indicate a phase value of each clock cycle of the first clock signal; and
a second sub-module of the first synchronous pointer control module is configured to determine the first pointer control signal, wherein in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle of the first clock signal.

3. The integrated circuit according to claim 2, wherein the second sub-module comprises a phase synchronization detection unit, a phase estimation unit, and a phase tracking unit,
the phase synchronization detection unit is configured to determine a target clock phase in the second clock signal based on the second clock phase and the first clock signal, wherein the target clock phase is a phase value of one clock cycle that is selected in the second clock signal;
the phase estimation unit is configured to determine a target clock cycle in the first clock signal corresponding to the target clock phase based on the first clock phase and the second clock cycle, wherein the target clock phase is located in a phase interval corresponding to the target clock cycle, and the phase interval is determined by a phase value of the target clock cycle and a phase value of a next clock cycle of the target clock cycle; and
the phase tracking unit is configured to continuously estimate the first pointer control signal output in each current clock cycle of the first clock signal based on the target clock phase and the target clock cycle.

4. The integrated circuit according to claim 3, wherein the phase synchronization detection unit comprises a multi-stage flip-flop group and an AND gate,
the multi-stage flip-flop group is configured to use the first clock signal as a clock to synchronize a transition edge that is selected in the second clock signal; and
the AND gate is configured to perform an AND operation on the transition edge that is synchronized and the second clock phase to obtain a phase value of a clock cycle where the transition edge that is selected is located as the target clock phase.

5. The integrated circuit according to claim 4, wherein the phase estimation unit is configured to compare the target clock phase with phase intervals respectively corresponding to a plurality of clock cycles to determine the target clock cycle corresponding to the target clock phase, wherein the plurality of clock cycles is a plurality of clock cycles in the first clock signal before the transition edge that is synchronized.

6. The integrated circuit according to claim 5, wherein the phase estimation unit is further configured to estimate a phase change of the second clock signal measured by a clock cycle of the first clock signal.

7. The integrated circuit according to any one of claims 3 to 6, wherein the phase tracking unit is configured to continuously estimate the first pointer control signal output in each current clock cycle of the first clock signal based on the target clock phase and the target clock cycle, by executing following steps:
determining a clock phase that is to-be-estimated based on the target clock phase and the second clock cycle; and
in the current clock cycle:
determining whether the clock phase that is to-be-estimated is located in a phase interval corresponding to the current clock cycle based on the clock phase that is to-be-estimated;
determining, in response to the clock phase that is to-be-estimated being located in the phase interval corresponding to the current clock cycle, the first pointer control signal output in the current clock cycle as the first value, and updating the clock phase that is to-be-estimated based on the second clock cycle; and
determining, in response to the clock phase that is to-be-estimated not being located in the phase interval corresponding to the current clock cycle, the first pointer control signal output in the current clock cycle as the second value.

8. The integrated circuit according to any one of claims 1 to 7, wherein the first read pointer and the first write pointer are adjusted according to the first pointer control signal in each clock cycle of the first clock signal, and the second read pointer and the second write pointer are adjusted according to the second pointer control signal in each clock cycle of the second clock signal;
in response to a data write operation being generated in a write clock cycle of the first clock domain, a data read operation is performed in a read clock cycle in the second clock signal corresponding to the write clock cycle,
wherein in response to the frequency of the first clock signal being greater than the frequency of the second clock signal, a rising edge in the second clock signal that is *a+1* second clock cycles apart from a rising edge of the read clock cycle is located in a previous clock cycle of the write clock cycle in the first clock signal, and
in response to the frequency of the first clock signal being less than the frequency of the second clock signal, a rising edge that is *a* first clock cycles apart from a rising edge of the write clock cycle is located in a previous clock cycle of the read clock cycle in the second clock signal, wherein *a* is a positive integer.

9. The integrated circuit according to any one of claims 1 to 8, wherein the first pointer control module further comprises a first state machine and a first asynchronous pointer control module, and the second pointer control module further comprises a second state machine and a second asynchronous pointer control module,
the first asynchronous pointer control module and the second asynchronous pointer control module each comprise a multi-stage flip-flop, and the first asynchronous pointer control module and the second asynchronous pointer control module perform, through respective multi-stage flip-flops, synchronization of the first write pointer, the first read pointer, the second write pointer, and the second read pointer between different clock domains;
the first state machine is configured to control, in a case where frequency switching occurs, the first clock domain to use the first asynchronous pointer control module to perform data transmission across clock domains, and control, after the frequency switching is completed and phase estimating is completed, the first clock domain to use the first synchronous pointer control module to perform the data transmission across clock domains; and
the second state machine is configured to control, in a case where frequency switching occurs, the second clock domain to use the second asynchronous pointer control module to perform the data transmission across clock domains, and control, after the frequency switching is completed and the phase estimating is completed, the second clock domain to use the second synchronous pointer control module to perform the data transmission across clock domains.

10. The integrated circuit according to claim 9, wherein the first state machine and the second state machine are further configured to receive first indication information indicating whether the frequency switching is completed, and second indication information indicating a frequency magnitude relationship between the first clock signal and the second clock signal;
in response to the first indication information indicating that the frequency switching occurs, the first state machine controls the first clock domain to use the first asynchronous pointer control module to perform the data transmission across clock domains, and the second state machine controls the second clock domain to use the second asynchronous pointer control module to perform the data transmission across clock domains; and
the first state machine and the second state machine are further configured to determine whether the frequency switching is completed and the phase estimating is completed according to the first indication information and the second indication information.

11. The integrated circuit according to claim 10, wherein the first state machine is configured to determine whether the frequency switching is completed and the phase estimating is completed according to the first indication information and the second indication information, by executing following operations:
in response to the first indication information indicating that the frequency switching is completed, and the second indication information indicating that the frequency of the first clock signal is greater than the frequency of the second clock signal:
the first state machine controls the first synchronous pointer control module to perform the phase estimating to obtain the phase relationship and determine the first pointer control signal based on the phase relationship,
in response to the phase estimating being completed by the first synchronous pointer control module, determine that the frequency switching is completed and the phase estimating is completed, and
the first state machine is further configured to perform synchronous handshaking with the second state machine, so that the second state machine controls the second clock domain to use the second synchronous pointer control module to perform the data transmission across clock domains; and
in response to the first indication information indicating that the frequency switching is completed, and the second indication information indicating that the frequency of the first clock signal is less than the frequency of the second clock signal:
after synchronous handshaking with the second state machine is completed, determine that the frequency switching is completed and the phase estimating is completed.

12. A data transmission method for clock domain crossing, applied to a first clock domain determined based on a first clock signal and a second clock domain determined based on a second clock signal, wherein the first clock domain comprises a first first-in-first-out buffer, the second clock domain comprises a second first-in-first-out buffer, the first clock signal and the second clock signal are same-source clock signals, a frequency of the first clock signal is greater than a frequency of the second clock signal, or the frequency of the first clock signal is less than a frequency of the second clock signal,
the data transmission method comprises:
determining, in the first clock domain, a first pointer control signal, and adjusting a first read pointer and a first write pointer of the first clock domain according to the first pointer control signal, wherein the first pointer control signal is used to indicate an update time point of the first read pointer and an update time point of the first write pointer;
determining, in the second clock domain, a second pointer control signal, and adjusting a second read pointer and a second write pointer of the second clock domain according to the second pointer control signal, wherein the second pointer control signal is used to indicate an update time point of the second read pointer and an update time point of the second write pointer; and
performing data transmission from the first clock domain to the second clock domain by using the first first-in-first-out buffer based on the first write pointer and the second read pointer, and performing data transmission from the second clock domain to the first clock domain by using the second first-in-first-out buffer based on the first read pointer and the second write pointer;
wherein determining the first pointer control signal comprises:
determining, in response to the frequency of the first clock signal being greater than the frequency of the second clock signal, a phase relationship between the first clock signal and the second clock signal according to a second clock phase and a second clock cycle of the second clock domain, the first clock signal, and a first clock phase of the first clock domain, and determining the first pointer control signal based on the phase relationship; and
determining, in response to the frequency of the first clock signal being less than the frequency of the second clock signal, the first pointer control signal as a first value, so that the first read pointer and the first write pointer increase by the first value in each clock cycle of the first clock signal.

13. The data transmission method according to claim 12, wherein determining the first pointer control signal further comprises:
determining the first clock phase according to a first clock cycle of the first clock domain, wherein the first clock phase is used to indicate a phase value of each clock cycle of the first clock signal,
wherein in response to the frequency of the first clock signal being greater than the frequency of the second clock signal, the first pointer control signal being the first value indicates that a rising edge of the second clock signal is located in a current clock cycle of the first clock signal, and the first pointer control signal being a second value indicates that no rising edge of the second clock signal is located in the current clock cycle.

14. The data transmission method according to claims 12 or 13, wherein determining the phase relationship between the first clock signal and the second clock signal according to the second clock phase and the second clock cycle of the second clock domain, the first clock signal, and the first clock phase, and determining the first pointer control signal based on the phase relationship comprises:
determining a target clock phase in the second clock signal based on the second clock phase and the first clock signal, wherein the target clock phase is a phase value of a clock cycle that is selected in the second clock signal;
determining a target clock cycle in the first clock signal corresponding to the target clock phase based on the first clock phase and the second clock cycle, wherein the target clock phase is located in a phase interval corresponding to the target clock cycle, and the phase interval is determined by a phase value of the target clock cycle and a phase value of a next clock cycle of the target clock cycle; and
continuously estimating the first pointer control signal output in each current clock cycle of the first clock signal based on the target clock phase and the target clock cycle.

15. The data transmission method according to any one of claims 12 to 14, further comprising:
controlling, when frequency switching occurs, the first clock domain and the second clock domain to use an asynchronous pointer control logic to perform data transmission across clock domains, and controlling, after the frequency switching is completed and phase estimating is completed, the first clock domain and the second clock domain to use a synchronous pointer control logic to perform the data transmission across clock domains,
wherein the asynchronous pointer control logic comprises synchronizing the first write pointer, the first read pointer, the second write pointer, and the second read pointer between different clock domains through a multi-stage flip-flop; the synchronous pointer control logic comprises obtaining the phase relationship and performing the data transmission across clock domains based on the phase relationship.

16. An electronic device, comprising:
a memory, non-transitorily storing a computer-executable instruction; and
a processor, configured to run the computer-executable instruction,
wherein when the computer-executable instruction is run by the processor, the data transmission method for clock domain crossing according to any one of claims 12 to 15 is implemented.

17. A non-transitory computer-readable storage medium, wherein the non-transitory computer-readable storage medium stores a computer-executable instruction, and when the computer-executable instruction is executed by a processor, the data transmission method for clock domain crossing according to any one of claims 12 to 15 is implemented.
